# EUROPÄISCHE PATENTANMELDUNG

(11) **EP 1 703 357 A1**
(43) Veröffentlichungstag der Anmeldung: **20.09.2006**
(21) Anmeldenummer: 06005005.1
(22) Anmeldetag: 11.03.2006
(51) Int. Cl.: G05D 23/02

(54) **Ventilanordnung für einen Heizkörper einer Warmwasser-Heizungsanlage**

(30) Priorität: 14.03.2005 DE 102005011937
(71) Anmelder: Gampper Technik GmbH, 67821 Alsenz (DE)
(72) Erfinder: Wenzel, Erwin, 65779 Kelkheim/TS (DE); Gampper, Axel, 55543 Bad Kreuznach (DE); Gampper, Julian, 55543 Bad Kreuznach (DE)
(74) Vertreter: Becker, Bernd

(57) **Zusammenfassung**

Eine Ventilanordnung für einen Heizkörper einer WarmwasserHeizungsanlage umfasst einen Vorlaufventilblock (1) und einen Rücklaufventilblock (17), die Anschlüsse (13, 32) für eine Fußbodenheizung aufweisen, wobei dem Rücklaufventilblock (17) ein Rücklauftemperaturbegrenzer (28) für die Fußbodenheizung zugeordnet ist, dessen Ventilansatz (31) mit einem Ventilsitz (30) in dem Rücklaufventilblock (17) zusammenwirkt. Der Rücklauftemperaturbegrenzer (28) ist mit einer mit dem Ventilansatz (31) verbundenen Ventilspindel (37) versehen, die eine axiale Bohrung (38) zur Verbindung des Anschlusses (32) der Fußbodenheizung mit einer Rücklaufleitung der WarmwasserHeizungsanlage aufweist.

## Beschreibung

Die Erfindung bezieht sich auf eine Ventilanordnung für einen Heizkörper einer Warmwasser-Heizungsanlage mit einem Vorlaufventilblock und einem Rücklaufventilblock, die Anschlüsse für eine Fußbodenheizung aufweisen, wobei dem Rücklaufventilblock ein Rücklauftemperaturbegrenzer für die Fußbodenheizung zugeordnet ist, dessen Ventilansatz mit einem Ventilsitz in dem Rücklaufventilblock zusammenwirkt.

Die DE 198 38 511 A1 offenbart eine Ventilgruppe für Fußbodenheizungen mit einem Raumthermostatventil und einem darin in Reihe geschalteten Rücklauftemperaturbegrenzer, der einen auf die Rücklauftemperatur ansprechenden Dehnstoffkörper aufweist. Der Rücklauftemperaturbegrenzer umfasst ein in das Ventilgehäuse des Raumthermostatventils integriertes oder unmittelbar damit verbundenes rohrförmiges Gehäuse, das den Dehnstoffkörper aufnimmt und an einem Ende durch einen eingeschraubten Stopfen verschlossen ist, der ein Ende des Dehnstoffkörpers abstützt, während das andere Ende des Dehnstoffkörpers ein Ventilglied trägt oder abstützt. Die Ventilgruppe ist in einem quaderförmigen Installationskasten untergebracht, der in eine Wand des zu heizenden Raumes eingelassen wird, weshalb ein Aufstemmen der Wand und Einmörteln des Installationskastens unumgänglich ist. Darüber hinaus ist es erforderlich, eine Vor- und Rücklaufleitung des Heizkreises sowie der Fußbodenheizung ebenfalls in der Wand zu verlegen, wodurch die Montage verhältnismäßig teuer und aufwändig ist.

Im Weiteren zeigt die DE 199 33 593 C2 einen Rücklauftemperaturbegrenzer für eine Heizungsanlage mit einem Ventilglied, das durch zwei Stellglieder zu betätigen ist. Das erste Stellglied ist als ein die Rücklauftemperatur des Heizmediums erfassender Dehnstoffkörper ausgebildet und das zweite Stellglied ist mit seiner Stellachse rechtwinklig zur Achse des Ventilgliedes orientiert sowie über eine Umlenkmechanik mit demselben gekoppelt. Das Ventilglied weist einen axialbeweglich geführten Schaft auf und der Dehnstoffkörper ist koaxial zum Stellglied angeordnet und beaufschlagt das Ende des Schaftes. Die Umlenkmechanik wird durch eine in den Schaft eingearbeitete Schrägfläche gebildet, die durch einen Stößel des zweiten Stellgliedes beaufschlagt wird. Aufgrund dieser Ausgestaltung weist der Rücklauftemperaturbegrenzer eine kompakte Bauform auf und kann in einer runden Anschlussdose mit einem verhältnismäßig kleinen Durchmesser untergebracht werden, wobei die Anschlussdose in einer Einbauöffnung in einer Wand zu montieren ist.

Darüber hinaus beschreibt die DE 296 11 577 U1 eine Anschlussvorrichtung für eine Fußbodenheizung mit einem an oder in einer Wand montierten Anschlusskasten, der ein Thermostatventil zur Temperaturregelung der Fußbodenheizung aufnimmt, das über einen oder mehrere Durchbrüche in der Gehäusewand mit einer ersten Leitung einer Heizungsanlage und mit der Fußbodenheizung verbunden ist. Eine zweite Leitung der Heizungsanlage ist über einen am oder im Anschlusskasten angeordneten Anschluss mit der Fußbodenheizung gekoppelt. Das Thermostatventil nimmt einen Rücklauftemperaturbegrenzer auf. Aufgrund dieser Maßnahmen ist es möglich, die Fußbodenheizung und gegebenenfalls Heizkörper an eine Ringleitung anzuschlie-βen.

Ferner zeigt die DE 200 19 943 U1 eine Heizungsanschlussanordnung mit einem Anschlussabschnitt für einen Heizkörper, wobei der Anschlussabschnitt den Vor- und Rücklaufanschluss des Heizkörpers mit der Ver- bzw. Entsorgungsleitung für ein Heizmedium verbindet. An dem Anschlussabschnitt sind Fußbodenheizungsvor- und Fußbodenheizungsrücklaufverbindungen angebracht, die Leitungen aufweisen, die von einer Vor- bzw. Rücklaufleitung des Anschlussabschnittes abgehen und zur Vor- bzw. Rücklaufversorgung der Fußbodenheizung führen. Die Leitungen sind über eingesetzte Kanäle an der Vor- bzw. Rücklaufleitung des Anschlussabschnittes angebracht. In der Fußbodenheizungsrücklaufverbindung ist ein Rücklauftemperaturbegrenzer vorgesehen.

Mittels derartiger Ventilanordnungen ist es möglich, einen Heizkörper und eine Fußbodenheizung an einem gemeinsamen mit der Heizung in Verbindung stehenden Strang zu betreiben, wobei der Rücklauftemperaturbegrenzer die Funktion hat, die Rücklauftemperatur des Warmwassers eines Heizkreislaufes auf einen zulässigen Maximalwert von beispielsweise 30 bis 50° C zu beschränken, um eine Überhitzung des Fußbodens zu vermeiden. Bei dem Rücklauftemperaturbegrenzer handelt es sich um ein einstellbares Thermostatventil, das jedoch nicht auf die Raumtemperatur, sondern auf die Rücklauftemperatur des Warmwassers anspricht. Demzufolge wird bei einer Überschreitung eines einstellbaren oberen Grenzwertes durch den Rücklauftemperaturbegrenzer auch bei niedriger Raumtemperatur und entsprechend weit geöffnetem Raumthermostatventil der Durchfluss durch die Fußbodenheizung gesperrt, so dass die Fußbodenheizung gefahrlos an einen Heizkreislauf für Heizkörper angeschlossen werden kann, der mit einer verhältnismäßig hohen Vorlauftemperatur von beispielsweise 60° C oder mehr betrieben wird. Als problematisch hat es sich in der Praxis erwiesen, dass bei einem gemeinsamen Anschluss für Heizkörper und Fußbodenheizung der eingestellte obere Grenzwert des Rücklauftemperaturbegrenzers häufig überschritten wird und demnach der Fußboden häufig abkühlt, was, insbesondere in einem Badezimmer, dessen Fußboden oftmals barfuss begangen wird, als unangenehm empfunden wird. Im Weiteren kühlt der Rücklauftemperaturbegrenzer nur schlecht ab, da die Vorlauftemperatur des Heizkreislaufs für die Heizkörper einen größeren Einfluss auf die Temperatur des Rücklauftemperaturbegrenzers ausübt als die Temperatur des Warmwassers der Fußbodenheizung.

Es ist Aufgabe der Erfindung, eine Ventilanordnung der eingangs genannten Art zu schaffen, die einen sicheren und einen für einen Benutzer komfortablen Betrieb der Fußbodenheizung gewährleistet.

Erfindungsgemäß wird die Aufgabe dadurch gelöst, dass der Rücklauftemperaturbegrenzer mit einer mit dem Ventilansatz verbundenen Ventilspindel versehen ist, die eine axiale Bohrung zur Verbindung des Anschlusses der Fußbodenheizung mit einer Rücklaufleitung der Warmwasser-Heizungsanlage aufweist.

Im Rahmen der Erfindung wird ein aus dem Stand der Technik bekannter Rücklauftemperaturbegrenzer verwendet, der die Rücklauftemperatur des Warmwassers des Heizkreislaufes auf einen zulässigen Maximalwert von ca. 30 bis 50° C beschränkt. Bei Erreichen des Maximalwertes wird der Rücklauftemperaturbegrenzer geschlossen, wobei der Ventilansatz in Richtung des Ventilsitzes verlagert wird, um eine Überhitzung des Fußbodens zu vermeiden. Damit zum einen eine Abkühlung des Rücklauftemperaturbegrenzers aufgrund der sinkenden Rücklauftemperatur des Warmwassers der Fußbodenheizung und damit dessen Öffnen bei der Unterschreitung des zulässigen Maximalwertes sichergestellt ist und zum anderen die beispielsweise in einem Badezimmer installierte Fußbodenheizung nicht völlig auskühlt, strömt auch bei einem geschlossenen Rücklauftemperaturbegrenzer Wasser von der Fußbodenheizung durch die Bohrung der Ventilspindel in die Rücklaufleitung der Warmwasser-Heizungsanlage, also zu dem entsprechenden Anschluss des Rücklaufventilblocks. Der Querschnitt der Bohrung ist derart bemessen, dass die durchströmende Wassermenge auch bei einer maximalen Temperatur des Warmwassers des Rückflusses nicht zu einer Beschädigung des Fußbodens führt. Bei einem konventionellen Rücklauftemperaturbegrenzer gemäß dem Stand der Technik erfolgt aufgrund der hohen Rücklauftemperatur des Warmwassers des Heizkreislaufes keine Abkühlung, weshalb der Rücklauftemperaturbegrenzer stets geschlossen bleibt und eine Erwärmung der Fußbodenheizung verhindert.

Erfindungsgemäß wird die Aufgabe alternativ dadurch gelöst, dass der Ventilansatz und/oder der Ventilsitz des Rücklauftemperaturbegrenzers derart ausgebildet ist, dass bei einem geschlossenen Rücklauftemperaturbegrenzer eine definierte Warmwassermenge durch strömt.

Bei Erreichen des zulässigen Maximalwert von ca. 30 bis 50°C wird der Rücklauftemperaturbegrenzer geschlossen, wobei der Ventilansatz in Richtung des Ventilsitzes verlagert wird, um eine Überhitzung des Fußbodens zu vermeiden. Damit die beispielsweise in einem Badezimmer installierte Fußbodenheizung nicht völlig auskühlt, strömt zwischen dem Ventilansatz und dem Ventilsitz eine definierte Wassermenge durch. Der Rücklauftemperaturbegrenzer ist demnach "undicht" ausgebildet. Hierbei ist der Strömungsquerschnitt derart bemessen, dass die durchströmende Wassermenge auch bei einer maximalen Temperatur des Warmwassers des Rückflusses nicht zu einer Beschädigung des Fußbodens führt. Sonach kann der an den Vorlaufventilblock und den Rücklaufventilblock angeschlossene Heizkörper mit einer relativ hohen Vorlauftemperatur betrieben werden, die in der Regel eine verhältnismäßig hohe, zum Schließen des Rücklauftemperaturbegrenzers führende Rücklauftemperatur zur Folge hat, und die Fußbodenheizung wird dennoch mit einer geringen Menge Warmwasser versorgt. Darüber hinaus bewirkt die den geschlossenen Rücklauftemperaturbegrenzer durchströmende Wassermenge eine Abkühlung eines Temperaturfühlers des Rücklauftemperaturbegrenzers, die eine Öffnung des Rücklauftemperaturbegrenzers zur Folge hat, wohingegen der aufgrund der hohen Rücklauftemperatur des Warmwassers des Heizkreislaufes nicht abkühlende Rücklauftemperaturbegrenzer stets geschlossen bleibt und eine Erwärmung der Fußbodenheizung verhindert.

In Ausgestaltung weist der Ventilsitz zumindest eine mehrflächige Anlagefläche für den kegelstumpfförmigen Ventilansatz auf. Die Größe und Form der mehrflächigen Anlagefläche ist von dem Fachmann einfach zu ermitteln. Hierbei ist lediglich zu beachten, dass der maximale Strömungsquerschnitt zwischen der Anlagefläche des Ventilsitzes und dem Ventilansatz bei einer maximalen Rücklauftemperatur der Heizung nicht zu einer Überschreitung der maximal zulässigen Betriebstemperatur der Fußbodenheizung führt.

Vorzugsweise ist die Anlagefläche des Ventilsitzes sechs- oder achtkantförmig ausgebildet. Eine derartige Ausgestaltung der Anlagefläche des Ventilsitzes ist sowohl gießtechnisch als auch mechanisch kostengünstig zu fertigen.

Nach einer Weiterbildung umfassen der Vorlaufventilblock und/oder der Rücklaufventilblock jeweils ein Stellventil zur strömungstechnischen Entkopplung des Heizkörpers von einer Zu- bzw. Rückleitung der Heizungsanlage. Aufgrund dieser Maßnahme ist der Heizkörper ohne eine Entleerung der gesamten Heizungsanlage demontierbar. In der Regel ist bei einer solchen Ausgestaltung mindestens ein Entleerventil vorgesehen, um das Wasser aus dem Heizkörper zu entfernen. Zweckmäßigerweise weisen der Vorlaufventilblock und/oder der Rücklaufventilblock eine insbesondere verschließbare Öffnung auf, durch die ein Werkzeug zur Verstellung des Stellventils durchführbar ist.

Zur Erzielung einer kompakten Bauform ist vorzugsweise das Stellventil kugelförmig ausgebildet. Vorteilhafterweise weist das Stellventil T-förmig oder rechtwinklig zueinander ausgerichtete Bohrungen als Strömungskanäle auf. In entsprechenden Stellungen des Stellventils ist durch die Bohrungen eine Durchströmung des Stellventils und damit eine Warmwasserversorgung des Heizkörpers gewährleistet oder verhindert. Selbstverständlich ist das Stellventil in einem entsprechenden Sitz des Vorlauf- bzw. Rücklaufventilblocks abgedichtet gelagert.

In alternativer Ausgestaltung ist das Stellventil als Spindelventil ausgebildet. Das Spindelventil weist bekanntermaßen Ringnuten und/oder Querbohrungen bzw. ein mit einer entsprechenden Bohrung zusammenwirkendes konisches Ende auf, um Strömungsquerschnitte zur Warmwasserversorgung des Heizkörpers frei zu geben oder zu verschließen.

Zur Regelung einer individuell einstellbaren Raumtemperatur, die im Wesentlichen durch den Heizkörper und nicht durch die Fußbodenheizung erzeugt wird, ist dem Vorlaufventilblock ein Raumtemperatur-Thermostat zur Temperierung des Heizkörpers zugeordnet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigt:

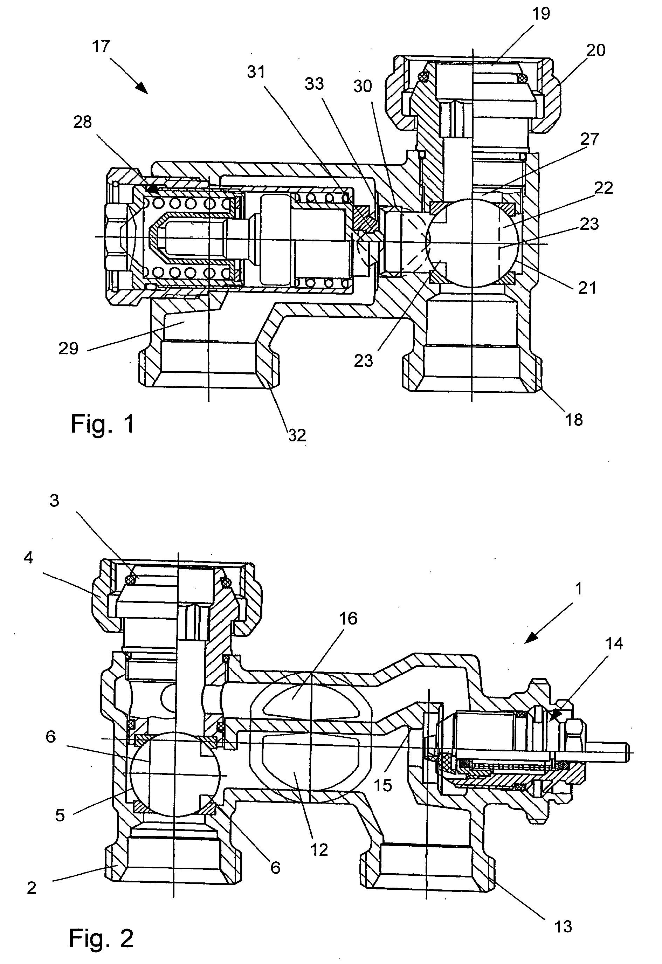

- Fig.1: einen Rücklaufventilblock einer erfindungsgemäßen Ventilanordnung,
- Fig.2: einen Vorlaufventilblock der Ventilanordnung,

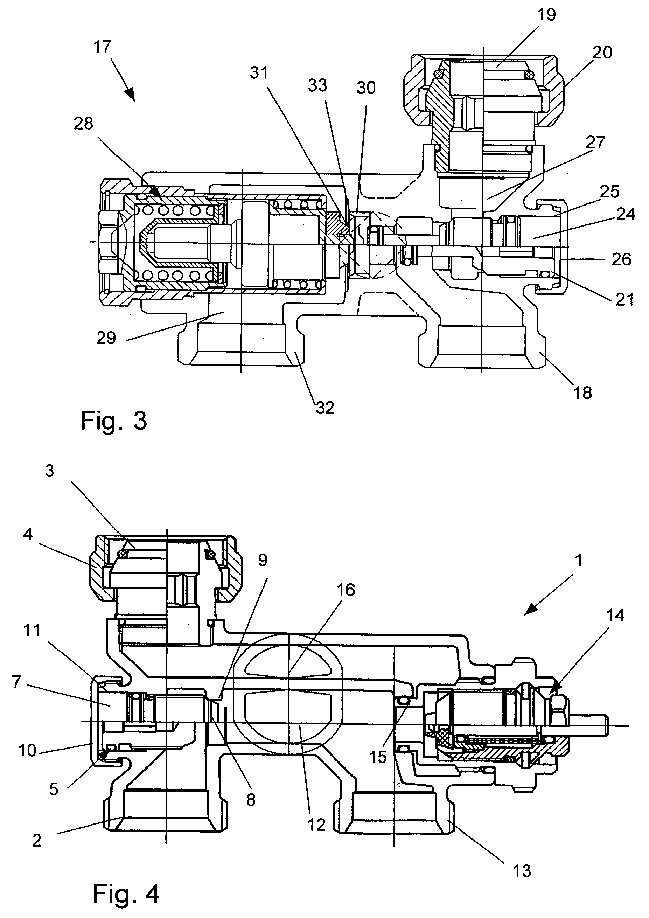

- Fig.3: einen Rücklaufventilblock nach Fig. 1 in alternativer Ausgestaltung,
- Fig.4: einen Vorlaufventilblock nach Fig. 2 in alternativer Ausgestaltung
- Fig.5: einen Rücklaufventilblock nach Fig. 1 in weiterer alternativer Ausgestaltung,
- Fig.6: eine Draufsicht auf den Rücklaufventilblock nach Fig. 5 in teilweise geschnittener Darstellung,
- Fig.7: eine Schnittdarstellung gemäß der Linie VII-VII nach Fig. 5 und
- Fig.8: eine Teildarstellung eines Rücklaufventilblocks einer alternativen erfindungsgemäßen Ventilanordnung im Schnitt.

Der Vorlaufventilblock 1 der Ventilanordnung umfasst einen Vorlaufanschluss 2 zur Verbindung mit einer Vorlaufleitung einer Warmwasser-Heizungsanlage und einen Vorlaufstutzen 3 mit zugeordneter Verschraubung 4 zum Anschluss eines Heizkörpers. Dem Vorlaufanschluss 2 ist ein Stellventil 5 zugeordnet, um den Heizkörper strömungstechnisch mit der Vorlaufleitung zu verbinden oder von dieser zu trennen, wozu das kugelförmige Stellventil 5 T-förmig zueinander verlaufende Bohrungen 6 aufweist. Alternativ ist das Stellventil 5 als Spindelventil 7 mit einem konischen Ende 8 ausgebildet, das zum Absperren des Heizkörpers gegen eine Bohrung 9 anliegt und damit eine Strömung des Warmwassers durch den Vorlaufventilblock 1 verhindert. Zur Verstellung des Spindelventils 7 weist der Vorlaufventilblock 1 eine mit einem Überwurfdeckel 10 verschließbare Öffnung 11 mit einem Innengewinde für das Spindelventil 7 auf. Das das Stellventil 5 durchfließende Warmwasser gelangt in einen ersten Vorlaufkanal 12, der zum einen in einen Anschluss 13 für eine Fußbodenheizung und zum anderen in eine einem Raumtemperatur-Thermostat 14 zugeordnete Ventilbohrung 15 mündet. Bei geöffnetem Raumtemperatur-Thermostat 14 gelangt das Warmwasser durch einen zweiten Vorlaufkanal 16 und den Vorlaufstutzen 3 in den Heizkörper.

Der Rücklaufventilblock 17 der Ventilanordnung steht über einen Rücklaufanschluss 18 mit einer Rücklaufleitung der Warmwasser-Heizungsanlage und über einen gegenüberliegenden Rücklaufstutzen 19 mit zugeordneter Verschraubung 20 mit dem Heizkörper in Verbindung. Zwischen dem Rücklaufanschluss 18 und dem Rücklaufstutzen 19 ist ein Stellventil 21 zur Entkopplung des Heizkörpers von der Rücklaufleitung der Warmwasser-Heizungsanlage vorgesehen, das eine manuell verdrehbare Kugel 22 mit zwei darin T-förmig zueinander verlaufenden Bohrungen 23 umfasst, die entsprechende Strömungsquerschnitte innerhalb des Rücklaufventilblocks 17 freigeben oder absperren. Alternativ dazu ist das Stellventil 21 als Spindelventil 24 ausgeführt, das in eine mit einem Innengewinde versehene Öffnung 25 des Rücklaufventilblocks 17 verstellbar eingesetzt ist, wobei die Öffnung 25 mit einem Überwurfdeckel 26 zu verschließen ist. Senkrecht zu einem ersten Rücklaufkanal 27, der den Rücklaufanschluss 18 mit dem Rücklaufstutzen 19 verbindet, ist ein einstellbarer Rücklauftemperaturbegrenzer 28 für die Fußbodenheizung in einem zweiten Rücklaufkanal 29 vorgesehen. Der zweite Rücklaufkanal 29 steht mit dem ersten Rücklaufkanal 27 über einen Ventilsitz 30 in Verbindung, dem ein Ventilansatz 31 des Rücklauftemperaturbegrenzers 28 zugeordnet ist. Der zweite Rücklaufkanal 29 des Rücklaufventilblocks 17 mündet in einen Anschluss 32 der Fußbodenheizung.

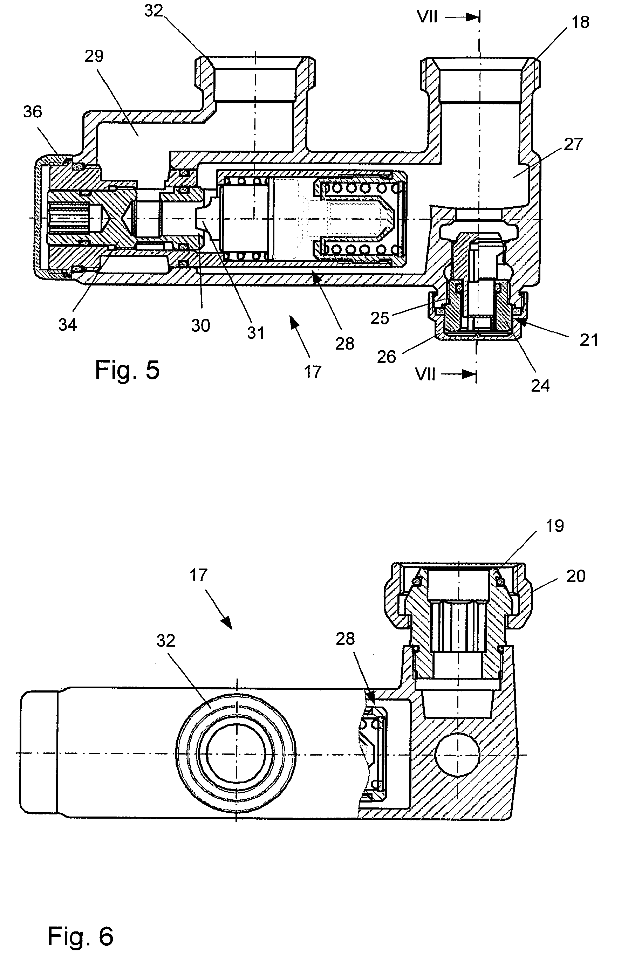

Bei dem alternativ ausgestalteten Rücklaufventilblock 17 ist gemäß Fig. 5 der Rücklaufstutzen um 90° versetzt zu dem Rücklaufanschluss 18 und dem Anschluss 32 der Fußbodenheizung ausgerichtet. Im Weiteren ist der Rücklauftemperaturbegrenzer 28 in seiner Längsachse um 180° verdreht gegenüber den zuvor erläuterten Ausführungsbeispielen angeordnet, so dass sein Ventilansatz 31 zu dem Ventilsitz 30 weist, der in einer in den Rücklaufventilblock 17 eingesetzten Stellspindel 34 ausgebildet ist. Mittels der stirnseitig in den Rücklaufventilblock 17 eingesetzten und mit einer Abdeckkappe 36 überdeckten Stellspindel 34 ist ein Kanal 35 innerhalb des Rücklaufventilblocks 17 zu öffnen und schließen, wobei bei geschlossenem Kanal 35 die Fußbodenheizung strömungstechnisch von der Rückleitung der Heizungsanlage entkoppelt ist.

Falls die Temperatur des aus dem Heizkörper in den Rücklaufventilblock 17 einströmenden Warmwassers oberhalb eines an dem Rücklauftemperaturbegrenzer 28 eingestellten Maximalwert von beispielsweise 40° C ist, wird der Ventilansatz 31 des Rücklauftemperaturbegrenzers 28 in Richtung des Ventilsitzes 30 bis zu seiner Anlage verlagert. Um oberhalb des eingestellten Maximalwertes eine Versorgung der Fußbodenheizung mit Warmwasser ohne eine aus einer Überhitzung resultierende Beschädigung eines die Fußbodenheizung aufnehmenden Fußbodens zu ermöglichen, weist der Ventilsitz 30 eine achtkantförmige Anlagefläche 33 für den kegelstumpfförmigen Ventilansatz 31 auf. Somit strömt eine durch die Dimensionierung des Achtkants der Anlagefläche 33 und des Ventilansatzes 31 definierte Wassermenge durch die zwischen der Anlagefläche 33 und dem Ventilansatz 31 vorhandenen Spalte. Im Weiteren hat die Durchströmung der zwischen der Anlagefläche 33 und dem Ventilansatz 31 vorhandenen Spalte eine Abkühlung eines Temperaturfühlers des Rücklauftemperaturbegrenzers 28 zur Folge, der nach der Unterschreitung des Maximalwertes der Temperatur des Warmwassers öffnet, worauf das Warmwasser die Fußbodenheizung ungehindert durchfließt.

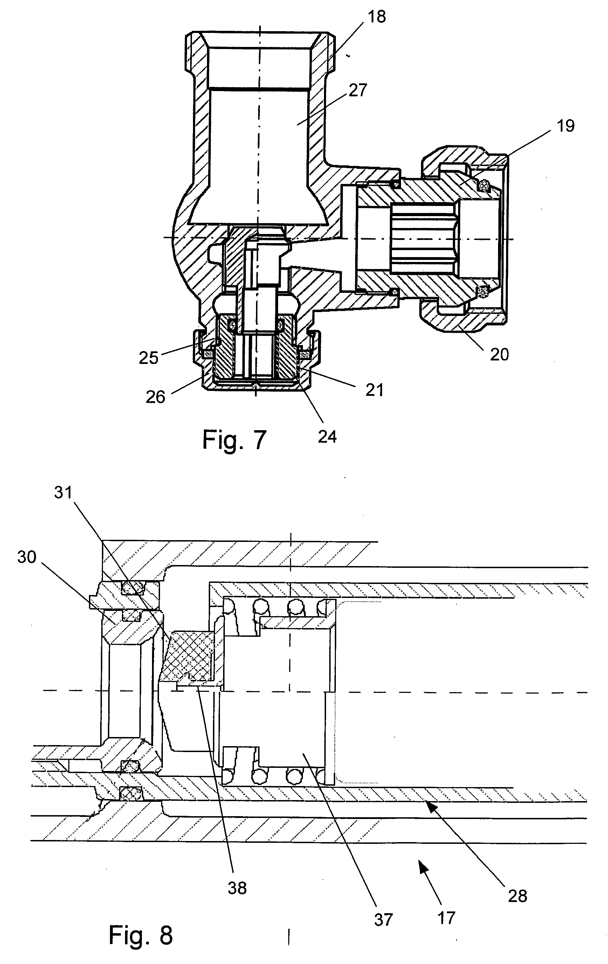

Bei dem Rücklaufventilblock nach Fig. 8 ist in eine an ihrem freien Ende den kegelstumpfförmigen Ventilansatz 31 aufweisenden Ventilspindel 37 eine koaxial zu deren Längserstreckung verlaufende Bohrung 38 eingelassen. Bei einem mittels der Ventilspindel 37 eingestellten Maximalwert von beispielsweise 40° C, wird der Ventilansatz 31 des Rücklauftemperaturbegrenzers 28 in Richtung des Ventilsitzes 30 bis zu seiner Anlage verlagert, um den Anschluss 32 der Fußbodenheizung strömungstechnisch von dem Rücklaufanschluss 18 der Warmwasser-Heizungsanlage bzw. dem Rücklaufstutzen 19 des Heizkörpers zu trennen. Damit in diesem geschlossenen Zustand des Rücklauftemperaturbegrenzers 28 dennoch Wasser zur Abkühlung des Temperaturfühlers des Rücklauftemperaturbegrenzers 28 durch denselben strömt, verbindet die Bohrung 38 den zweiten Rücklaufkanal 29 mit dem ersten Rücklaufkanal 27. Die Bohrung 38 weist einen derartigen Querschnitt auf, dass selbst bei einer maximalen Rücklauftemperatur des Warmwassers eine Beschädigung des die Fußbodenheizung aufweisenden Fußbodens ausgeschlossen ist.

### Bezugszeichenliste

- 1.: Vorlaufventilblock
- 2.: Vorlaufanschluss
- 3.: Vorlaufstutzen
- 4.: Verschraubung
- 5.: Stellventil
- 6.: Bohrung
- 7.: Spindelventil
- 8.: Ende v. 7
- 9.: Bohrung
- 10.: Überwurfdeckel
- 11.: Öffnung
- 12.: erster Vorlaufkanal
- 13.: Anschluss
- 14.: Raumtemperatur-Thermostat
- 15.: Ventilbohrung
- 16.: zweiter Vorlaufkanal
- 17.: Rücklaufventilblock
- 18.: Rücklaufanschluss
- 19.: Rücklaufstutzen
- 20.: Verschraubung
- 21.: Stellventil
- 22.: Kugel
- 23.: Bohrung
- 24.: Spindelventil
- 25.: Öffnung
- 26.: Überwurfdeckel
- 27.: erster Rücklaufkanal
- 28.: Rücklauftemperaturbegrenzer
- 29.: zweiter Rücklaufkanal
- 30.: Ventilsitz
- 31.: Ventilansatz
- 32.: Anschluss
- 33.: Anlagefläche
- 34.: Stellspindel
- 35.: Kanal
- 36.: Abdeckkappe
- 37.: Ventilspindel
- 38.: Bohrung

## Patentansprüche

1. Ventilanordnung für einen Heizkörper einer Warmwasser-Heizungsanlage mit einem Vorlaufventilblock (1) und einem Rücklaufventilblock (17), die Anschlüsse (13, 32) für eine Fußbodenheizung aufweisen, wobei dem Rücklaufventilblock (17) ein Rücklauftemperaturbegrenzer (28) für die Fußbodenheizung zugeordnet ist, dessen Ventilansatz (31) mit einem Ventilsitz (30) in dem Rücklaufventilblock (17) zusammenwirkt, **dadurch gekennzeichnet, dass** der Rücklauftemperaturbegrenzer (28) mit einer mit dem Ventilansatz (31) verbundenen Ventilspindel (37) versehen ist, die eine axiale Bohrung (38) zur Verbindung des Anschlusses (32) der Fußbodenheizung mit einer Rücklaufleitung der Warmwasser-Heizungsanlage aufweist.

2. Ventilanordnung nach dem Oberbegriff des Anspruchs 1, **dadurch gekennzeichnet, dass** der Ventilansatz (31) und/oder der Ventilsitz (30) des Rücklauftemperaturbegrenzers (28) derart ausgebildet ist, dass bei einem geschlossenen Rücklauftemperaturbegrenzer (28) eine definierte Warmwassermenge durch strömt.

3. Ventilanordnung nach Anspruch 2, **dadurch gekennzeichnet, dass** der Ventilsitz (30) zumindest eine mehrflächige Anlagefläche (33) für den kegelstumpfförmigen Ventilansatz (31) aufweist.

4. Ventilanordnung nach Anspruch 2, **dadurch gekennzeichnet, dass** die Anlagefläche (33) des Ventilsitzes (30) sechs- oder achtkantförmig ausgebildet ist.

5. Ventilanordnung nach einem der Ansprüche 1 bis 4, **dadurch gekennzeichnet, dass** der Ventilsitz (30) in einer in den Rücklaufventilblock (17) eingesetzten Stellspindel (34) ausgebildet ist.

6. Ventilanordnung nach Anspruch 5, **dadurch gekennzeichnet, dass** die Stellspindel (34) zur strömungstechnischen Entkopplung der Fußbodenheizung von der Rückleitung der Heizungsanlage ausgebildet ist.

7. Ventilanordnung nach Anspruch 1 oder 2, **dadurch gekennzeichnet, dass** der Vorlaufventilblock (1) und/oder der Rücklaufventilblock (17) jeweils ein Stellventil (5, 21) zur strömungstechnischen Entkopplung des Heizkörpers von einer Zu- bzw. Rückleitung der Heizungsanlage umfassen.

8. Ventilanordnung nach Anspruch 7, **dadurch gekennzeichnet, dass** der Vorlaufventilblock (1) und/oder der Rücklaufventilblock (17) eine insbesondere verschließbare Öffnung (11, 25) aufweisen, durch die ein Werkzeug zur Verstellung des Stellventils (5, 21) durchführbar ist.

9. Ventilanordnung nach Anspruch 7 oder 8, **dadurch gekennzeichnet, dass** das Stellventil (5, 21) kugelförmig ausgebildet ist.

10. Ventilanordnung nach einem der Ansprüche 7 bis 9, **dadurch gekennzeichnet, dass** das Stellventil (5, 21) T-förmig oder rechtwinklig zueinander ausgerichtete Bohrungen (6, 23) als Strömungskanäle aufweist.

11. Ventilanordnung nach Anspruch 7 oder 8, **dadurch gekennzeichnet, dass** das Stellventil (5, 21) als Spindelventil (7, 24) ausgebildet ist.

12. Ventilanordnung nach einem der Ansprüche 1 bis 11, **dadurch gekennzeichnet, dass** dem Vorlaufventilblock (1) ein Raumtemperatur-Thermostat (14) zur Temperierung des Heizkörpers zugeordnet ist.
